# EUROPEAN PATENT APPLICATION

(11) **EP 2 249 615 A1**
(43) Date of publication of application: **10.11.2010**
(21) Application number: 09290317.8
(22) Date of filing: 04.05.2009
(51) Int. Cl.: H04W 92/02

(54) **Handover from non 3GPP to 3GPP access network**

(71) Applicant: Alcatel Lucent, 75008 Paris (FR)
(72) Inventor: Orlandi, Barbara, 91620 Nozay (FR); El Mghazli, Yacine, 91620 Nozay (FR)
(74) Representative: El Manouni, Josiane

(57) **Abstract**

One object of the present invention is a method for handover from non 3GPP to 3GPP Access Network AN, for a User Equipement UE accessing a 3GPP Packet Core Network 3GPP CN in a multi-Access Network system, said method comprising a step of:
- exchanging signalling with 3GPP CN via an Interworking entity IWK entity while said UE is still served by non 3GPP AN, using the same type of signalling between UE and IWK entity whatever the type of UE and type of 3GPP CN , 3GPP Pre-Rel.8 or 3GPP non Pre-Rel.8.

## Description

The present invention generally relates to mobile communication networks and systems.

Detailed descriptions of mobile communication networks and systems can be found in the literature, such as literature published by standardisation bodies.

One example is 3GPP networks and systems, such as for example 2G, 3G or LTE, a description of which can be found in particular in 3GPP standards.

Another example is non 3GPP networks and systems, such as for example WiMAX (a description of which can be found in particular in IEEE 802.16e and WiMAX Forum standards).

In such systems, a User Equipment UE generally has access to a Core Network CN via an Access Network AN.

In multi-Access Network systems, where a UE can access a 3GPP Packet Core Network 3GPP CN via different types of ANs, such as 3GPP and non 3GPP ANs, there is a need to improve interworking and/or mobility between such different types of ANs.

The present invention in particular addresses such needs.

These and other objects are achieved, in one aspect, , in an embodiment, by a method for handover from non 3GPP to 3GPP Access Network AN, for a User Equipement UE accessing a 3GPP Packet Core Network 3GPP CN in a multi-Access Network system, said method comprising a step of:
- exchanging signalling with 3GPP CN via an Interworking IWK entity while said UE is still served by non 3GPP AN, using the same type of signalling between UE and IWK entity, whatever the type of UE and type of 3GPP CN, 3GPP Pre-Rel.8 or 3GPP non Pre-Rel.8.

These and other objects are achieved, in another aspect, by entities, such as in particular User equipment UE and Interworking entity IWK entity, and non 3GPP AN entity (such as in particular ASN-GW), for performing such method.

These and other objects will become more apparent from the following description taken in conjunction with the accompanying drawings:
- figure 1 illustrates schematically an example of system, for the case of non Pre-Rel.8 3GPP CN, and Pre-Rel.8 UE,
- figures 2 to 14 illustrate schematically an example of handover from WiMAX to UTRAN in a system such as the one illustrated in figure 1,
- figure 15 illustrates schematically an example of system, for the case of non Pre-Rel.8 3GPP CN, and non Pre-Rel.8 UE,
- figures 16 to 30 illustrate schematically an example of handover from WiMAX to E-UTRAN in a system such as the one illustrated in figure 15,
- figure 31 illustrates schematically an example of system, for the case of Pre-Rel.83GPP CN, and Pre-Rel.8 UE,
- figures 32 to 40 illustrate schematically an example of handover from WiMAX to GERAN/UTRAN in a system such as the one illustrated in figure 31.

In multi-Access Network systems, where a UE can access a 3GPP Packet Core Network 3GPP CN via different types of ANs, such as 3GPP and non 3GPP ANs, there is a need to improve interworking and/or mobility between such different types of ANs. In particular, at handover from non 3GPP to 3GPP AN, there is a need to minimize the handoff break time by preparing the target 3GPP AN to receive the MS after the handoff, in particular for a single-radio multi-mode terminal or UE as it cannot be connected simultaneously to non 3GPP AN (for example WiMAX) and 3GPP (for example 2G, 3G or LTE); in other words, there is a need to address single-radio interworking and mobility from non 3GPP (for example WiMAX) to 3GPP.

In some embodiments, it is proposed, since the User Equipment UE has no way to know whether it faces a pre-Release 8 Packet Core or an Evolved Packet Core EPC (i.e. Release 8 or beyond), to use a single type of Interworking IWK function both for LTE and UTRAN/GERAN UEs.

In some embodiments, it is proposed that the IWK function behaves as a fake SGSN for LTE UEs as well, leveraging on the ability of an LTE UE to interwork with 2G/3G as per TS 24.008.

In some embodiments, it is proposed to exchange signalling with 3GPP Packet Core Network (also noted 3GPP CN) via an Interworking entity IWK entity also noted SFF (Signalling Forwarding Function) while a UE is still served by non 3GPP AN (for example WiMAX AN).

In some embodiments, it is proposed to use the same type of signalling between UE and the IWK entity SFF :
- whatever the UE type: 3GPP Pre-Rel.8 UE (i.e. UE capable of interacting with a 3GPP Pre-Rel.8 CN but not necessarily with a 3GPP non Pre-Rel.8 CN), or 3GPP non Pre-Rel.8 (i.e. UE capable of interacting with a 3GPP non Pre-Rel.8 CNand with a 3GPP Pre-Rel.8 CN),
- whatever the 3GPP CN type: 3GPP Pre-Rel.8 CN (e.g. GPRS Packet Core) or 3GPP non Pre-Rel.8 CN (e.g. Evolved Packet Core EPC as introduced by Release 8 of 3GPP standard).

The above expression "3GPP non Pre-Rel.8" is intended to cover 3GPP Release 8, as well as 3GPP Releases beyond Release 8 as far as they are based on 3G LTE introduced by Release 8.

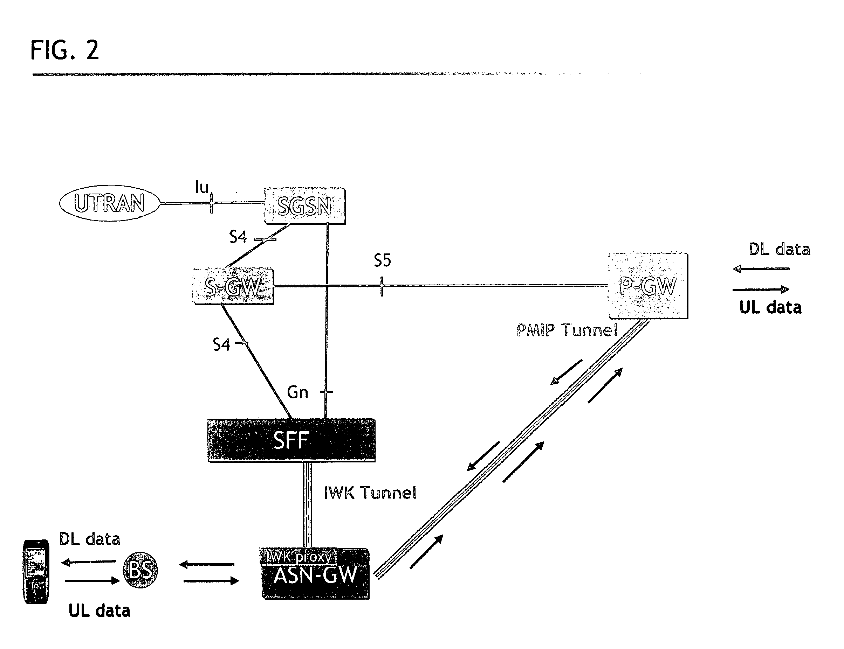

Also, in some embodiments, it is proposed that a tunnel, noted IWK Tunnel, is set-up between ASN-GW and SFF for interworking purposes. Signalling exchanged between UE and SFF via the IWK Tunnel will also be noted IWK signalling.

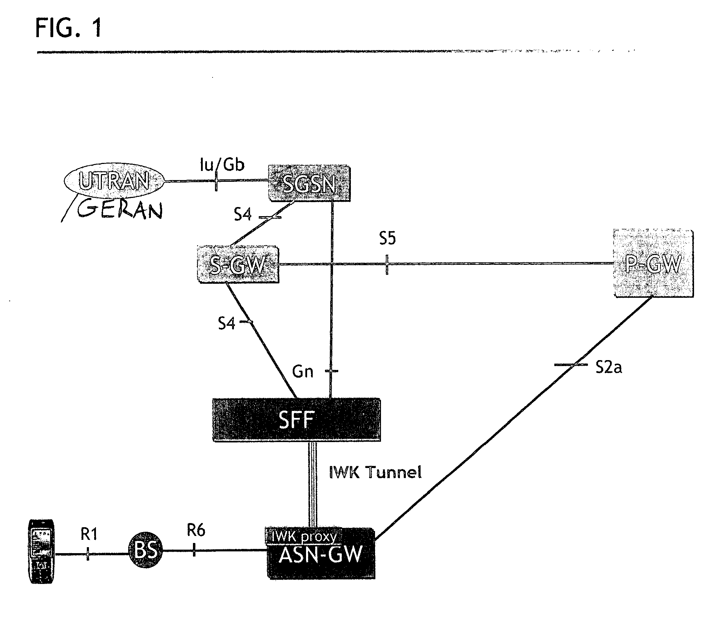

Figure 1 illustrates an example of system, for the case of non Pre-Rel.8 3GPP CN, Pre-Rel.8 UE, 3GPP AN corresponding to UTRAN, and non 3GPP AN corresponding to WiMAX AN.
   The system schematically illustrated in figure 1 comprises, by way of example:
   - a User equipment UE, in this example a multi-mode WiMAX-UTRAN User equipment UE,
   - a WiMAX Access Network including a Base Station BS and an ASN Gateway ASN-GW,
   - a 3GPP Access Network, in this example UTRAN,
   - a 3GPP Packet Core Network comprising in this example: EPC nodes such as PDN Gateway P-GW and Serving Gateway S-GW (with S-GW and P-GW inter-connected by 3GPP S5 interface, and P-GW and ASN-GW interconnected by 3GPP S2a interface), and GPRS CN nodes such as Serving GPRS Support Node SGSN (with SGSN and S-GW interconnected by 3GPP S4 interface, and SGSN and UTRAN interconnected by 3GPP lu interface),
   - an Interworking entity, IWK entity, also called SFF (Signalling Forwarding Function), connected on the one hand to S-GW via 3GPP S4 interface and to SGSN via 3GPP Gn interface, and on the other hand to WiMAX ASN-GW via an Interworking IWK Tunnel.
   In a system such as the one illustrated by way of example in figure 1, a handover from WiMAX to UTRAN may be performed as illustrated by way of example in figures 2 to 14.
Figure 2 illustrates data path in the user plane (said data including Downlink DL data and Uplink UL data), before starting the handover process. In the illustrated example, the data path includes:
   - PMIP Tunnel between P-GW and ASN-GW,
   - data path on the interface between ASN-GW and BS.

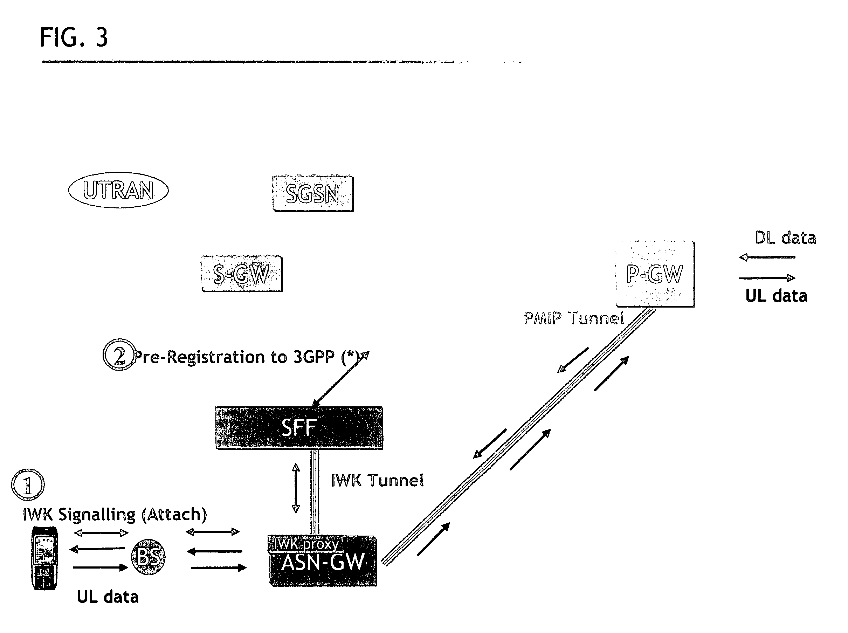

Figure 3 illustrates a 3GPP Attach procedure (in case such procedure is required). In the illustrated example, the following steps are provided, as per 3GPP TS 23.060:
   - at step 1, the UE sends IWK signalling (in this case 3GPP Attach Request as per 3GPP 24.008 or TS 23.060) via BS, ASN-GW, and IWK Tunnel, to SFF acting as a Pre-Rel.8 SGSN.
   - at step 2, SFF performs pre-registration to 3GPP.

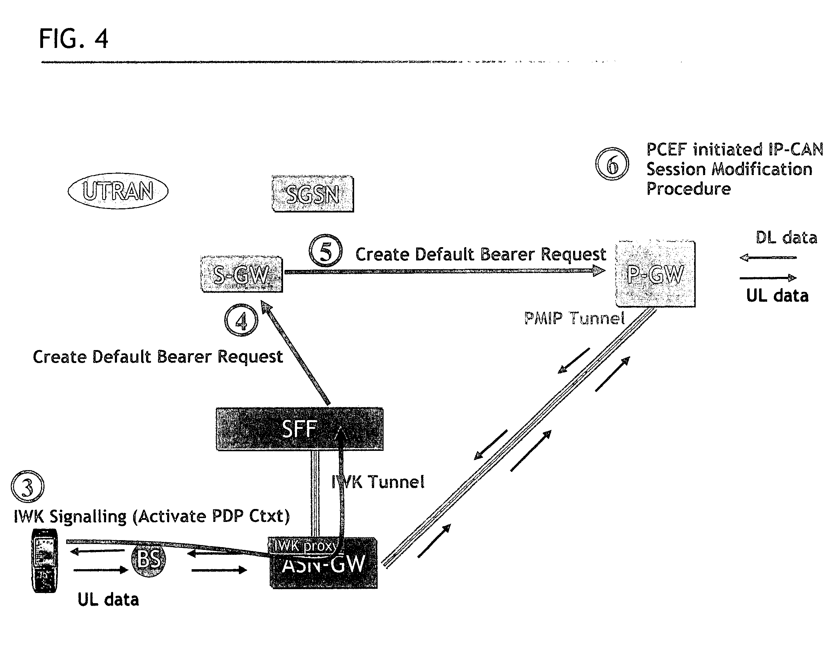

Figure 4 illustrates a first part of a 3GPP PDP Context Activation procedure. In the illustrated example, the following steps are provided (as per 3GPP TS 23.060):
   - at step 3, the UE sends IWK signalling (in this case 3GPP Activate PDP Context Request as per 3GPP TS 24.008 or TS 23.060) to SFF via BS, ASN-GW, and IWK Tunnel,
   - at step 4, SFF, acting as a non Pre-Rel. 8 SGSN, sends a Create Default Bearer Request to S-GW,
   - at step 5, S-GW sends a Create Default Bearer Request to P-GW,
   - at step 6, an IP-CAN Session Modification procedure is initiated by PCEF (Policy and Charging Enforcement Function).

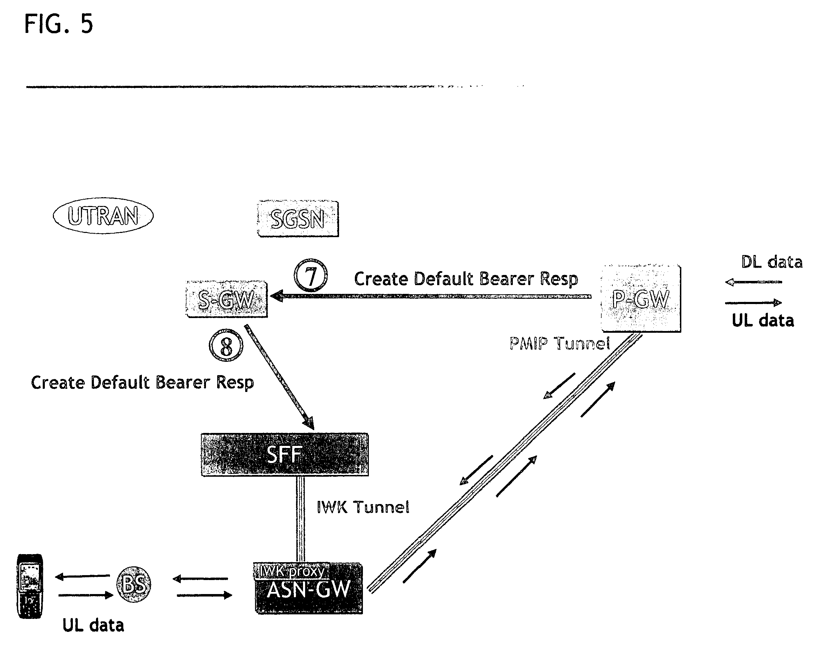

Figure 5 illustrates a second part of the 3GPP PDP Context Activation procedure. In the illustrated example, the following steps are provided (as per 3GPP TS 23.060):
   - at step 7, P-GW sends a Create Default Bearer Response to S-GW,
   - at step 8, S-GW sends a Create Default Bearer Response to SFF acting as a non Pre-Rel.8 SGSN.

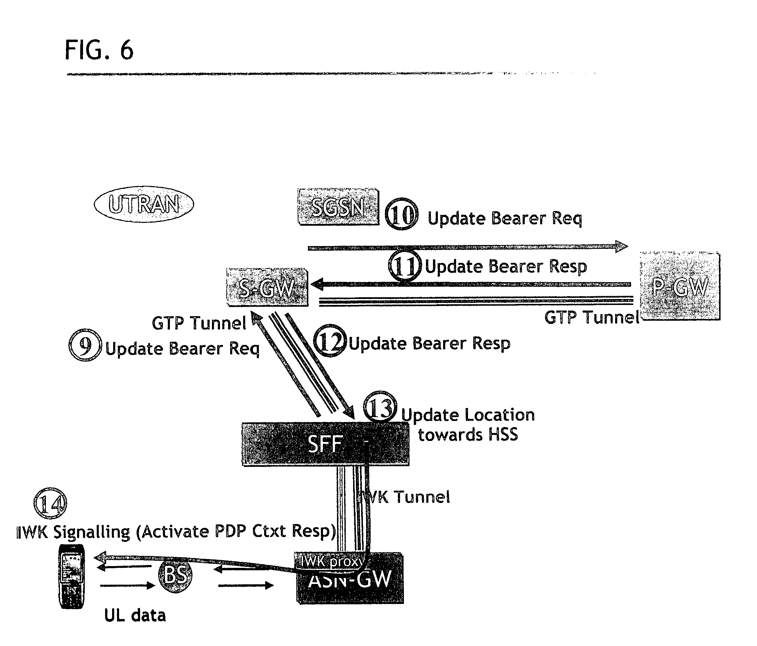

Figure 6 illustrates a third part of the 3GPP PDP Context Activation procedure. In the illustrated example, the following steps are provided (as per 3GPP TS 23.060):
   - at step 9, SFF, acting as a non Pre-Rel.8 SGSN, sends an Update Bearer Request to S-GW,
   - at step 10, S-GW sends an Update Bearer Request to P-GW,
   - at step 11, P-GW sends an Update Bearer Response to S-GW,
   - at step 12, S-GW sends an Update Bearer Response to SFF acting as a non Pre-Rel.8 SGSN,
   - at step 13, SFF performs a Location Update towards Home Subscriber Server HSS,
   - at step 14, SFF acting as a Pre-Rel.8 SGSN sends IWK signalling (in this case 3GPP Activate PDP Context Response as per 3GPP TS 24.008 or TS 23.060) to the UE via IWK Tunnel, ASN-GW and BS.

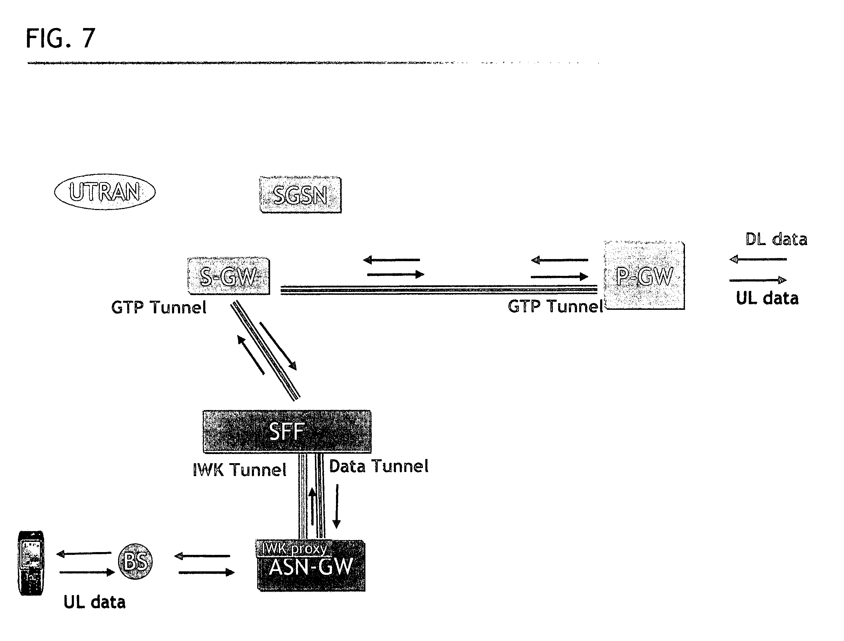

Figure 7 illustrates data path after the Activate PDP Context procedure. In the illustrated example, the data path comprises:
   - GTP Tunnel between P-GW and S-GW,
   - GTP Tunnel between S-GW and SFF,
   - Data Tunnel between SFF and ASN-GW,
   - data path on the interface between ASN-GW and BS.

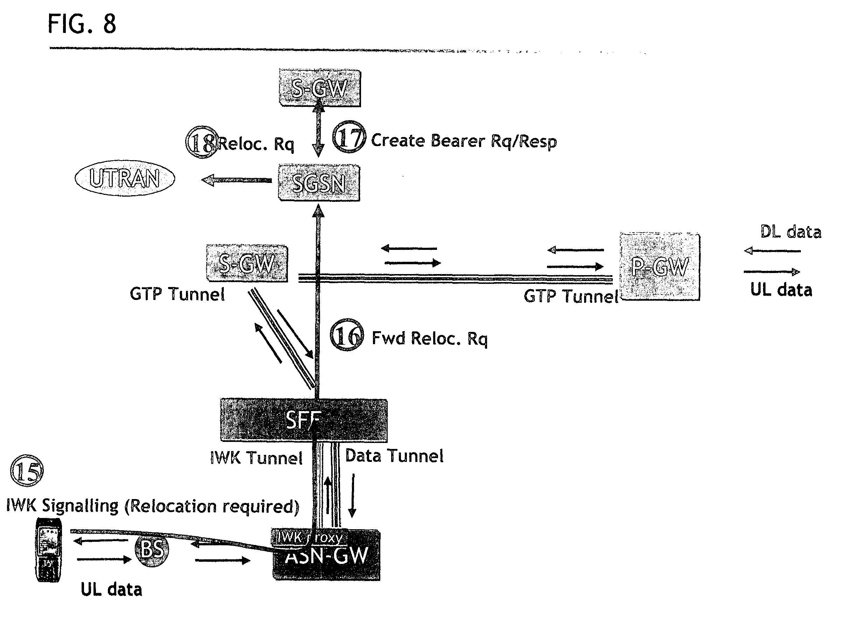

Figure 8 illustrates a first part of a 3GPP CN node relocation procedure. In the illustrated example, the following steps are provided:
   - at step 15, IWK signalling (noted Relocation Required to indicate that it is used to initiate an inter-SGSN Relocation procedure as per 3GPP TS 29.060, in a way similar to a Relocation Required according to SRNS Relocation procedure per 3GPP TS 25.413) is sent by UE via BS, ASN-GW, and IWK Tunnel, to SFF acting as a Pre-Rel.8 SGSN,
   - at step 16, SFF, acting as an old Pre-Rel.8 SGSN, sends a Forward Relocation Request according to inter-SGSN Relocation procedure as per 3GPP TS 29.060, to a new SGSN,
   - at step 17, Create Bearer Request/Response are exchanged between target SGSN and target S-GW (as per inter-RAT Handover from E-UTRAN to UTRAN procedure specified in 3GPP TS 23.401), with new SGSN (according to inter-SGSN Relocation procedure as per 3GPP TS 29.060) acting as target SGSN (according to E-UTRAN to UTRAN handover procedure),
   - at step 18, target SGSN sends Relocation Request to UTRAN (as per inter-RAT Handover from E-UTRAN to UTRAN procedure specified in 3GPP TS 23.401).
   The illustrated case corresponds by way of example to the case of S-GW relocation, i.e. target S-GW distinct of serving S-GW (serving S-GW corresponding to the S-GW illustrated in figures 4 to 7).

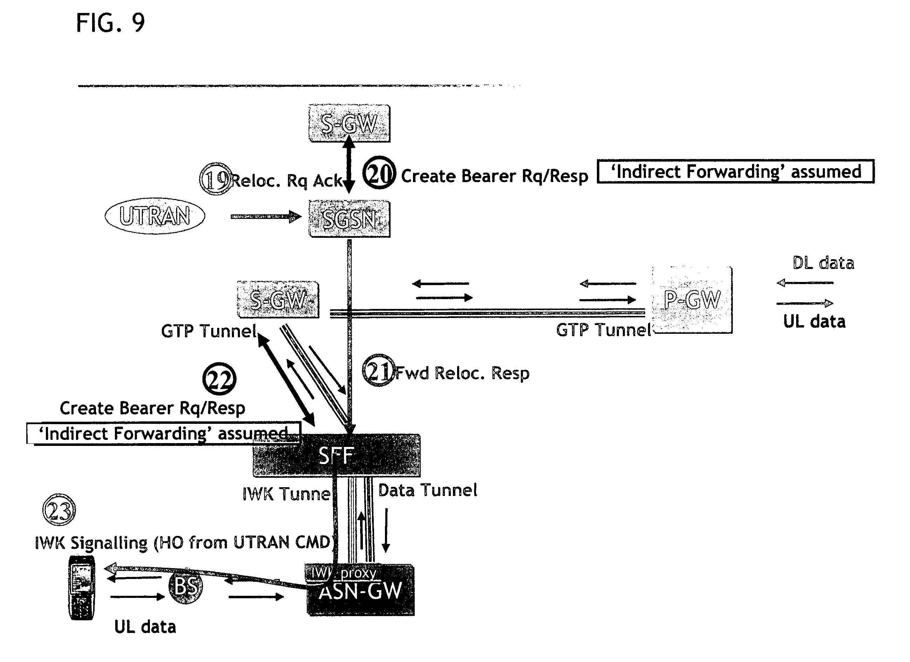

Figure 9 illustrates a second part of the relocation procedure. In the illustrated example, the following steps are provided:
   - at step 19, UTRAN sends Relocation Request Ack. to target SGSN (as per Handover from E-UTRAN to UTRAN procedure specified in 3GPP TS 23.401),
   - at step 20, in case of Indirect Forwarding, Create Bearer Request/Response are exchanged between S-GW and target SGSN (as per Handover from E-UTRAN to UTRAN procedure specified in 3GPP TS 23.401),
   - at step 21, target SGSN sends Forward Relocation Response to SFF acting as old SGSN (as per inter-SGSN Relocation procedure specified in 3GPP TS 29.060),
   - at step 22, in case of Indirect Forwarding, Create Bearer Request/Response are exchanged between S-GW and SFF (as per Handover from E-UTRAN to UTRAN procedure specified in 3GPP TS 23.401),
   - at step 23, SFF acting as a Pre-Rel.8 SGSN sends IWK signalling (noted HO From UTRAN Command to indicate that it is used to convey a HO command from UTRAN to the UE, in a way similar to information carried by a Relocation Command according to 3GPP TS. 25.413 to the UE via IWK Tunnel, ASN-GW and BS.

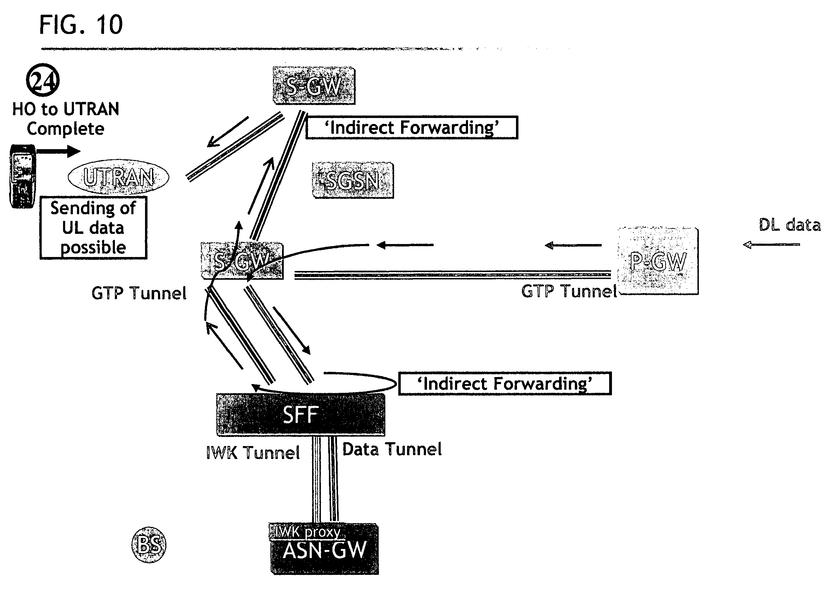

Figure 10 illustrates a third part of the relocation procedure. In the illustrated example, the following steps are provided:
   - at step 24, UE sends a HO to UTRAN Complete to UTRAN (as per Handover from E-UTRAN to UTRAN procedure specified in 3GPP TS 23.401),
   - data forwarding steps, wherein buffered data are transmitted from SFF to the target SGSN (as per Handover from E-UTRAN to UTRAN procedure specified in 3GPP TS 23.401), the illustrated case corresponding by way of example to the case of Indirect Forwarding, where data are forwarded via S-GW, DL data path as illustrated in figure 10 comprising:

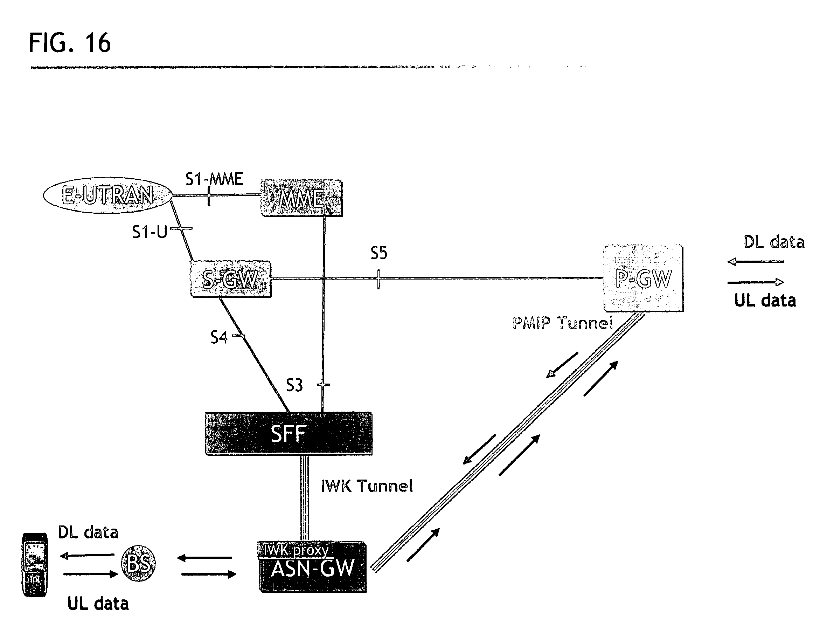

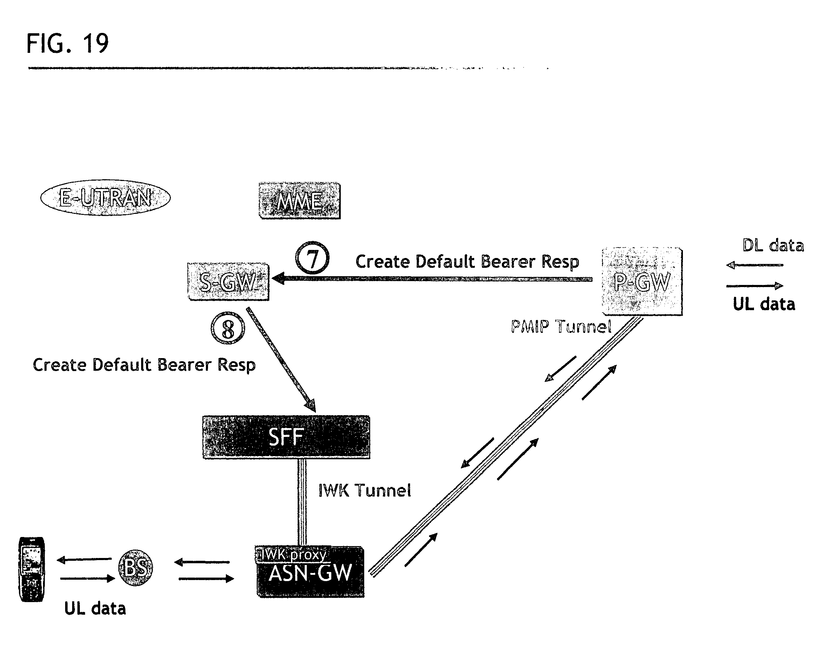

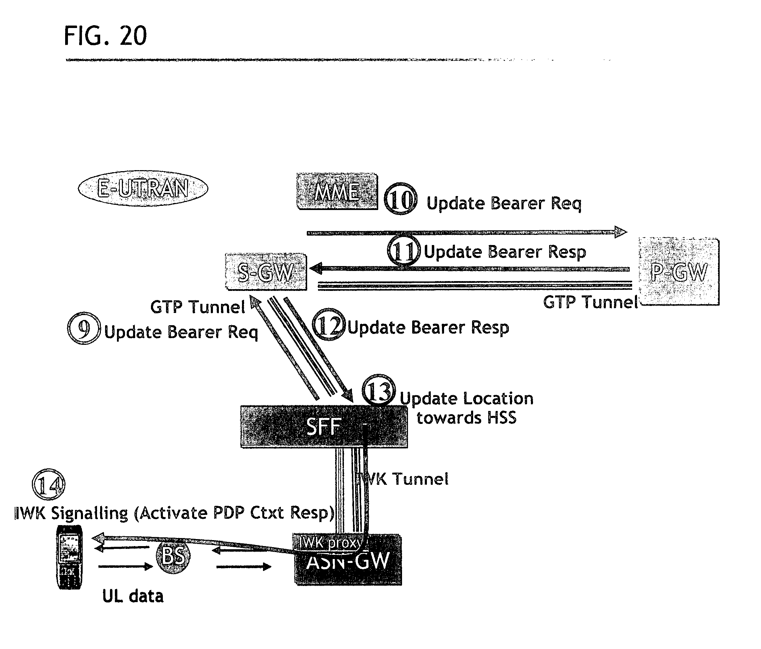

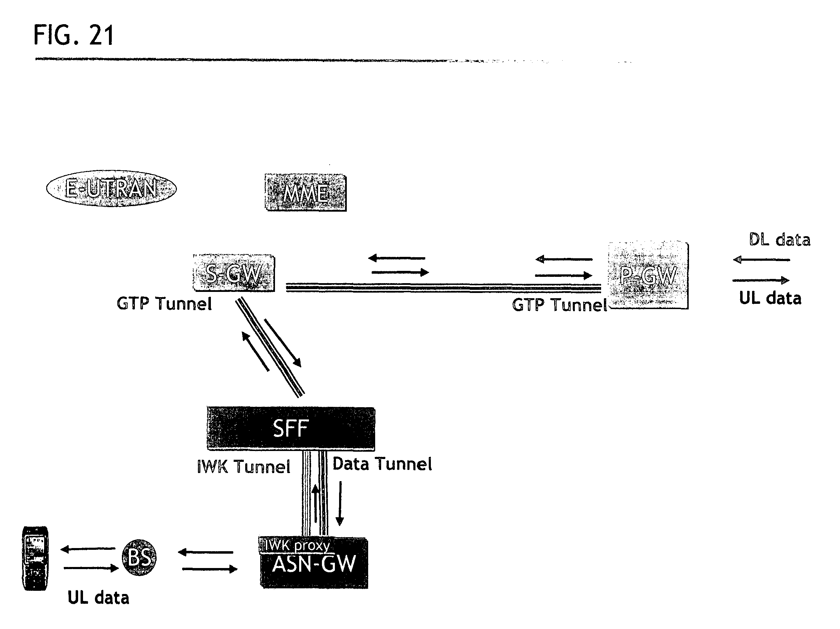

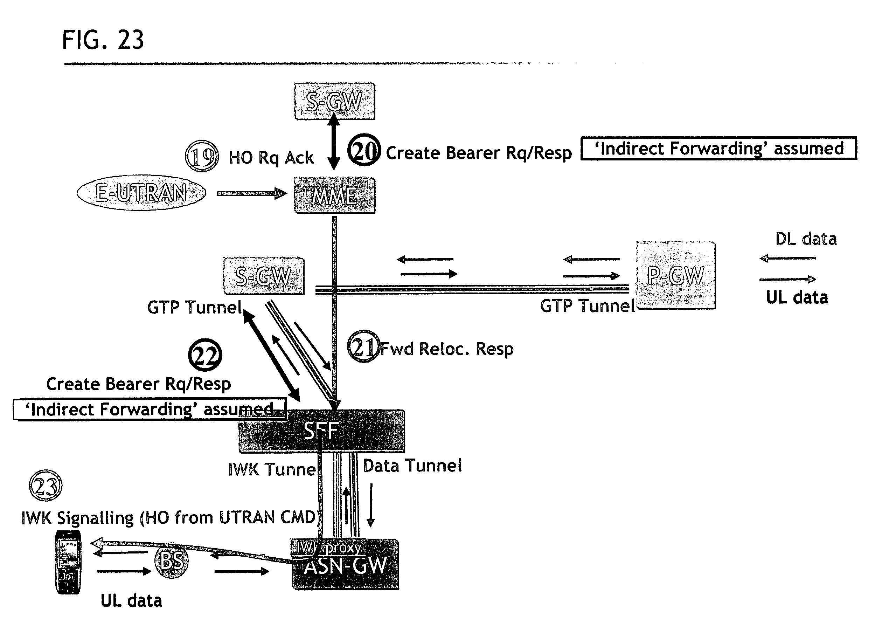

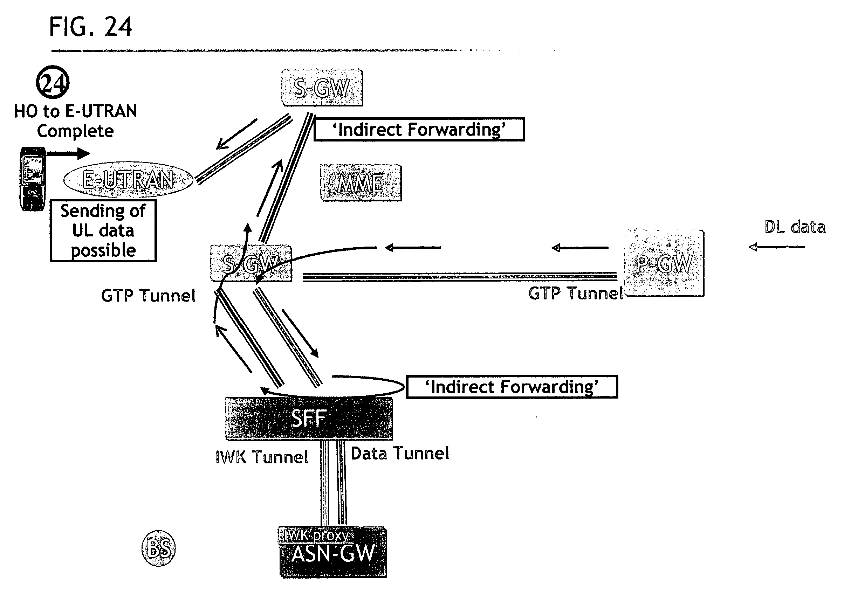

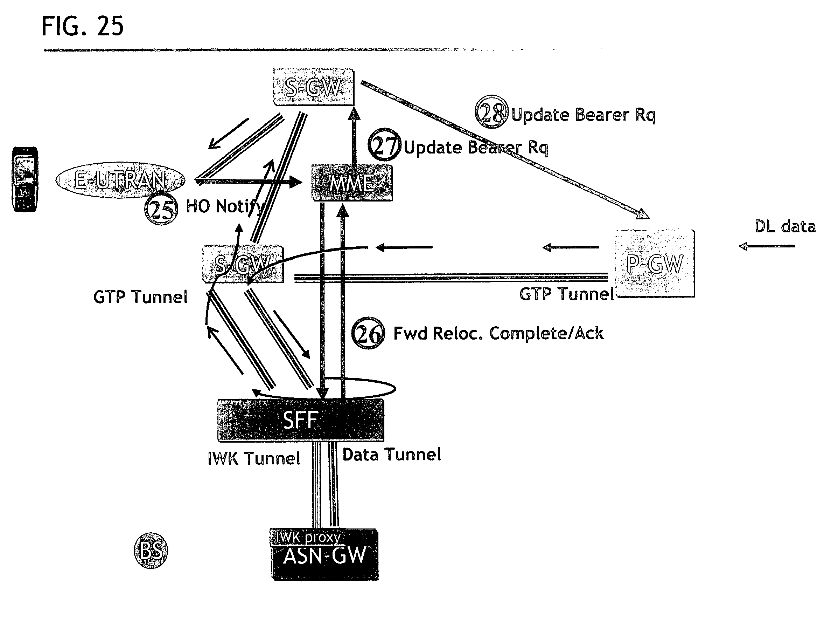

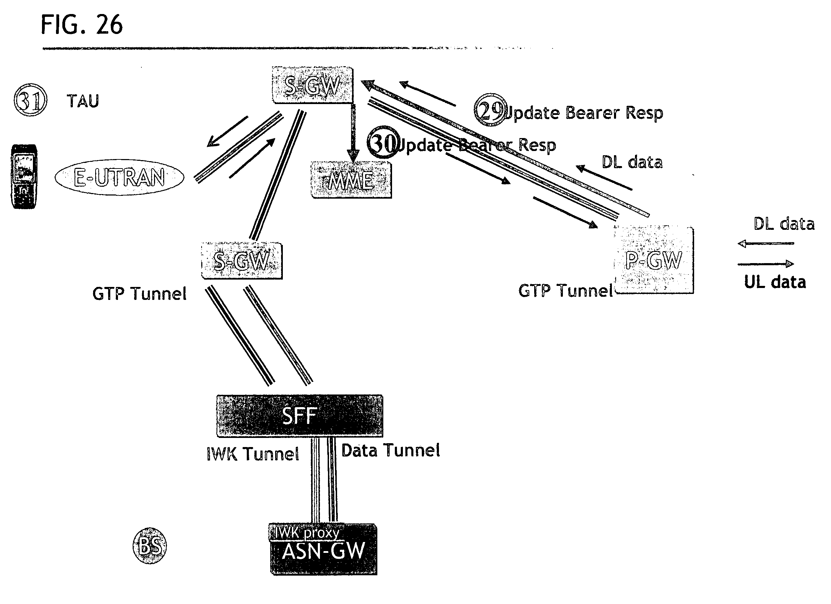

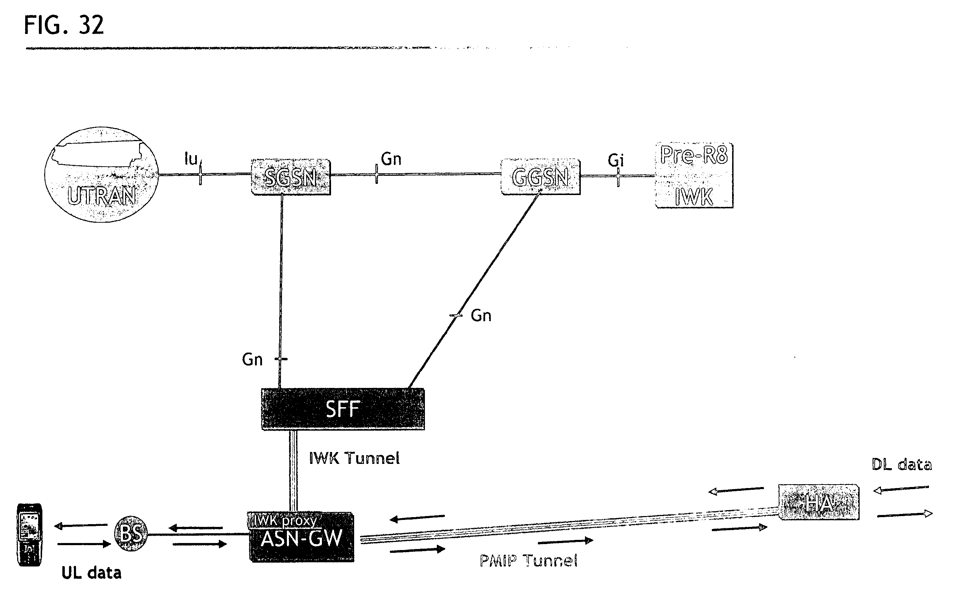

   - GTP Tunnel between P-GW and serving S-GW
   - GTP Tunnel between serving S-GW and SFF
   - data path between SFF and serving S-GW
   - data path between serving S-GW and target S-GW
   - GTP Tunnel between target S-GW and UTRAN.

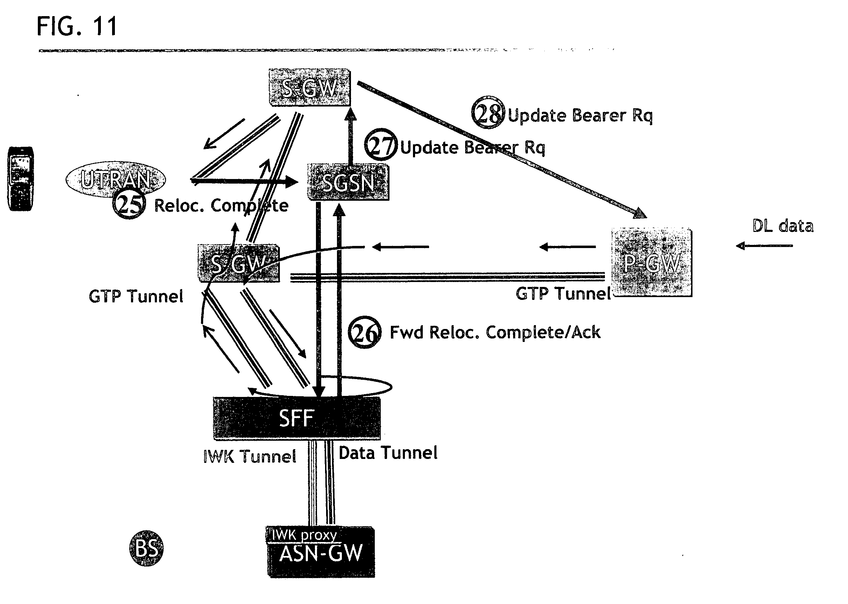

Figure 11 illustrates a fourth part of the relocation procedure. In the illustrated example, the following steps are provided (as per Handover from E-UTRAN to UTRAN procedure specified in 3GPP TS 23.401):
   - at step 25, UTRAN sends Relocation Complete to target SGSN,
   - at step 26, Forward Relocation Complete/Ack are exchanged between target SGSN and SFF,
   - at step 27, target SGSN sends Update Bearer Request to S-GW,
   - at step 28, S-GW sends Update Bearer Request to P-GW.

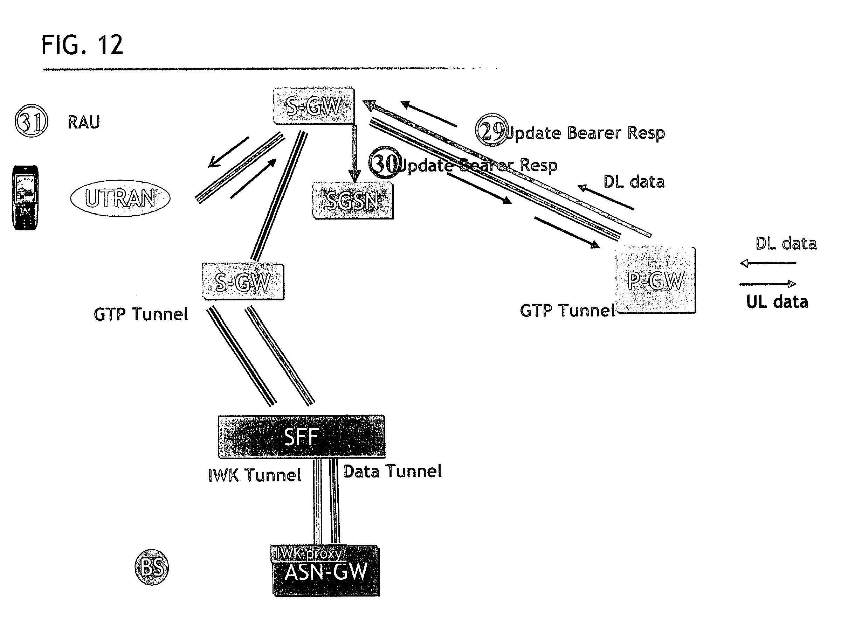

Figure 12 illustrates a fifth part of the relocation procedure. In the illustrated example, the following steps are provided (as per Handover from E-UTRAN to UTRAN procedure specified in 3GPP TS 23.401):
   - at step 29, P-GW sends Update Bearer Response to S-GW,
   - at step 30, S-GW sends Update Bearer Response to target SGSN,
   - at step 31, the UE performs Routing Area Update.
   In the example illustrated in figure 12, the data path then comprises:
   - GTP Tunnel between P-GW and target S-GW
   - GTP Tunnel between target S-GW and UTRAN.
In figure 12, the data paths between serving S-GW and SFF and between SFF and ASN-GW have not yet been removed.

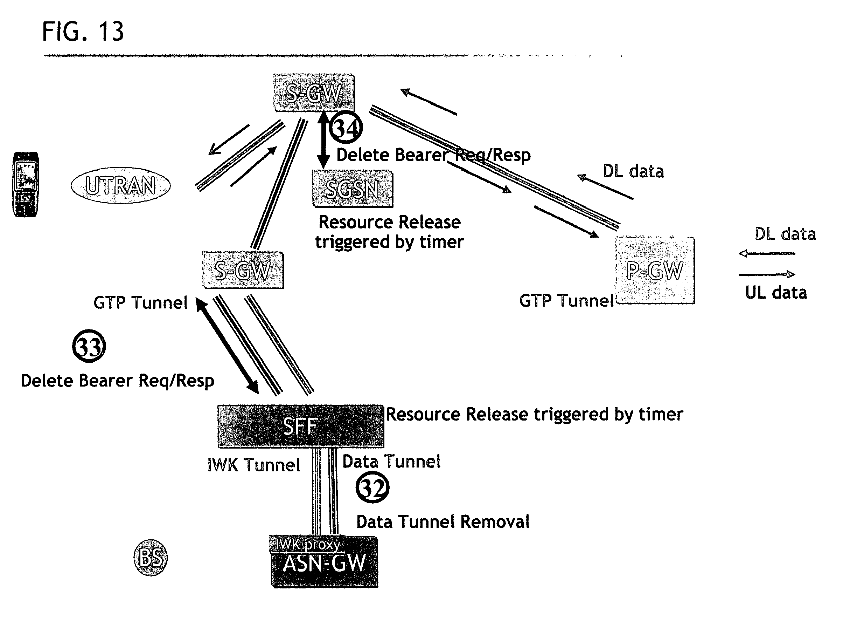

Figure 13 illustrates resources release in handover from E-UTRAN to UTRAN execution. The following steps are provided:
   - at step 32, Data Tunnel removal between SFF and ASN-GW,
   - at step 33, Delete Bearer Request/Response are exchanged between serving S-GW and SFF,
   - at step 34, Delete Bearer Request/Response are exchanged between S-GW and target SGSN.

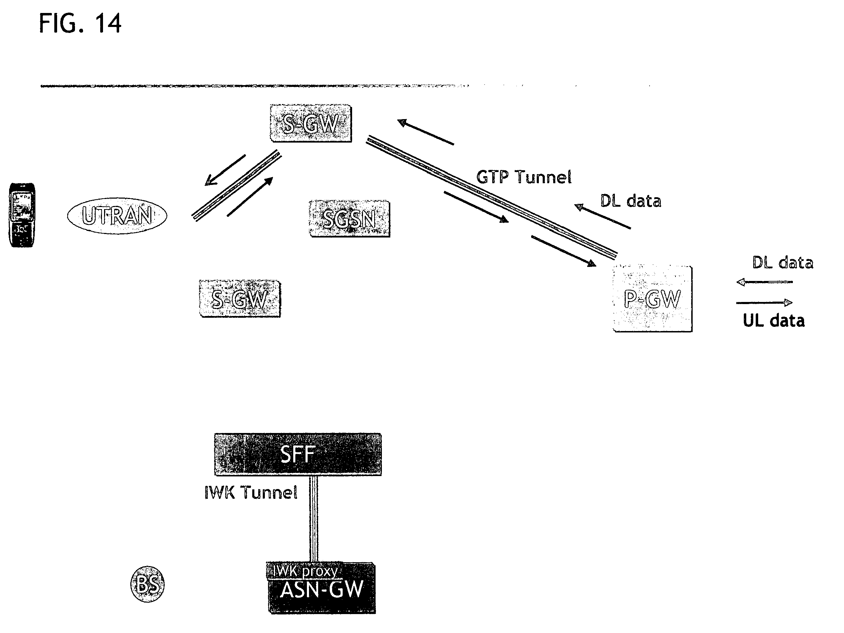

Figure 14 illustrates user data path after relocation procedure, final state. In the illustrated example (where the Direct Tunnel feature is used), the data path comprises:
   - GTP Tunnel between P-GW and target S-GW,
   - GTP Tunnel between target S-GW and UTRAN.

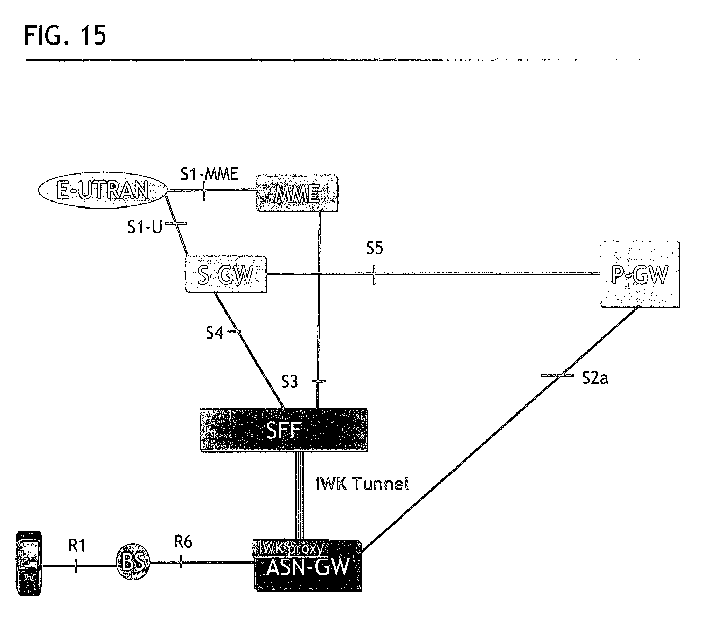

Figure 15 illustrates an example of system, for the case of non Pre-Rel.8 3GPP CN, non Pre-Rel.8 UE, 3GPP AN corresponding to E-UTRAN and non 3GPP AN corresponding to WiMAX AN .
   The system schematically illustrated in figure 15 comprises, by way of example:
   - a User equipment UE, in this example a multi-mode WiMAX/E-UTRAN User equipment UE,
   - a WiMAX Access Network including a Base Station BS and an ASN Gateway ASN-GW,
   - a 3GPP Access Network, in this example E-UTRAN,
   - a 3GPP Packet Core Network comprising: EPC nodes such as PDN Gateway P-GW, Serving Gateway S-GW, and Mobility Management Entity MME, with S-GW and P-GW inter-connected by 3GPP S5 interface, MME and E-UTRAN inter-connected with by 3GPP S1-MME interface, and S-GW and E-UTRAN interconnected by 3GPP S1-U interface,
   - an Interworking entity noted SFF (Signalling forwarding Function), connected on the one hand to S-GW via 3GPP S4 interface and to MME via 3GPP S3 interface, and on the other hand to WiMAX ASN-GW via the Interworking tunnel IWK Tunnel.
   In a system such as the one illustrated by way of example in figure 15, a handover from WiMAX to E-UTRAN may be performed as illustrated by way of example in figures 16 to 30.
Figure 16 steps, similar to figure 2 steps, illustrates data path in the user plane (said data including Downlink DL data and Uplink UL data), before starting the handover process.

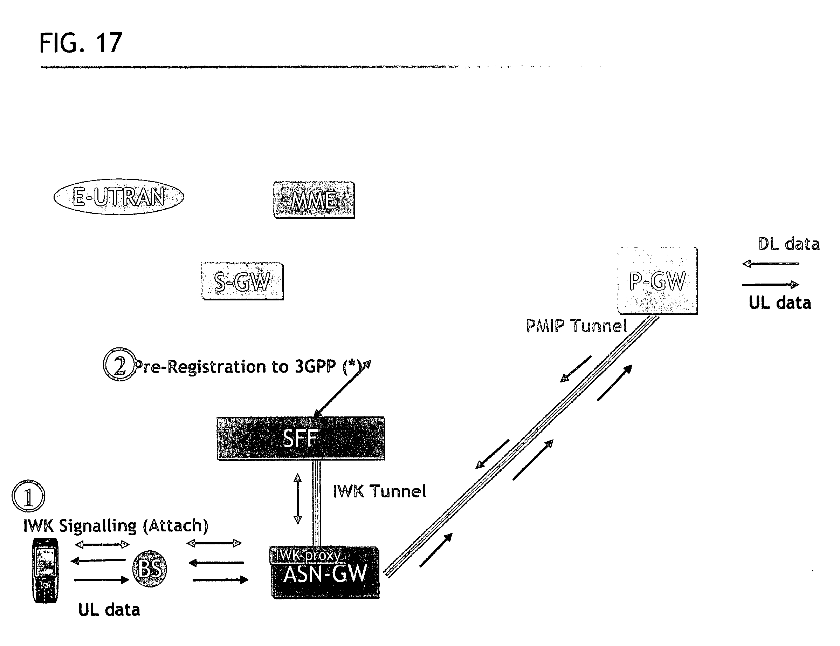

Figure 17 steps (similar to figure 3 steps) illustrates a 3GPP Attach procedure (in case such procedure is required).

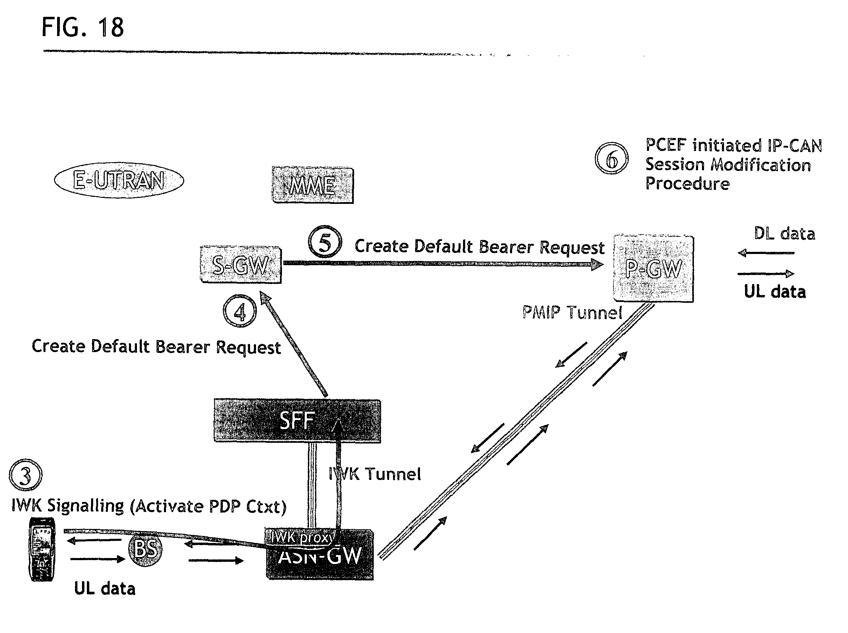

Figures 18 to 21 steps (similar to figures 4 to 7 steps) illustrate a 3GPP PDP Context Activation procedure.

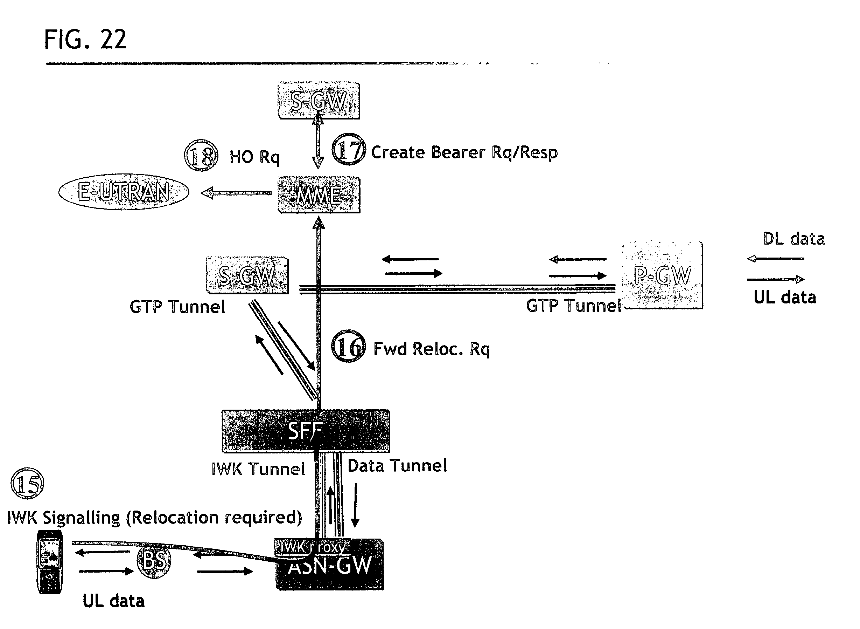

Figures 22 to 26 steps illustrate a relocation procedure. They are similar to figures 8 to 12 steps, with UTRAN replaced by E-UTRAN, Handover from E-UTRAN to UTRAN procedure as per 3GPP TS 23.401 replaced by Handover from UTRAN to E-UTRAN procedure as per 3GPP TS 23.401, and target SGSN replaced by target MME, except that there is no more inter-SGSN Relocation procedure, and SFF is now acting as a source SGSN for the inter-RAT Handover procedure (in this case from UTRAN to E-UTRAN).

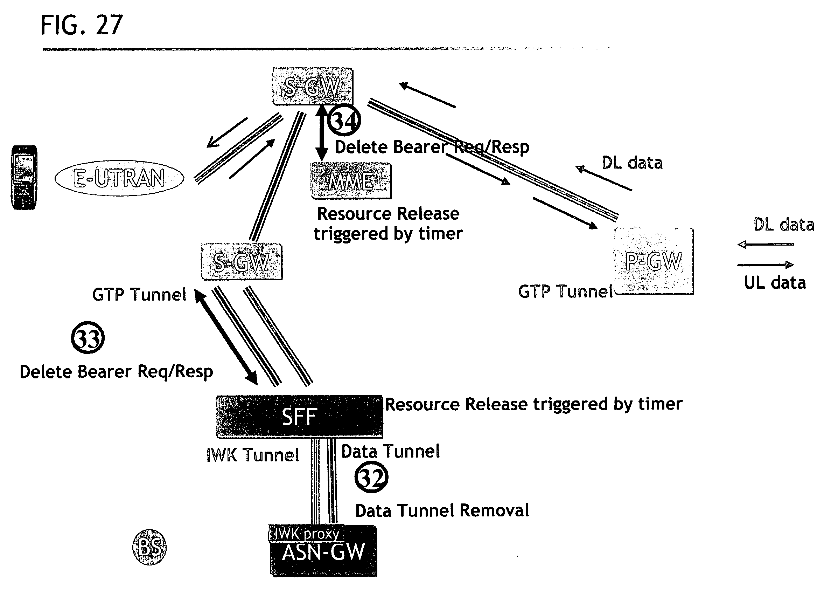

Figure 27 steps illustrate resources release in handover from UTRAN to E-UTRAN execution. They are similar to figure 13 steps, with UTRAN replaced by E-UTRAN.

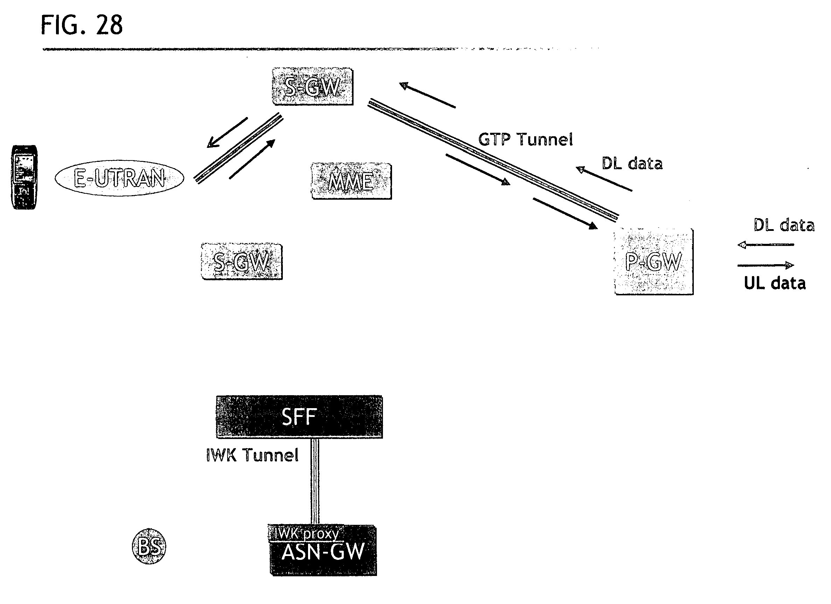

Figure 28 illustrates the data path after relocation procedure, final state. It is similar to figure 14, with UTRAN replaced by E-UTRAN.

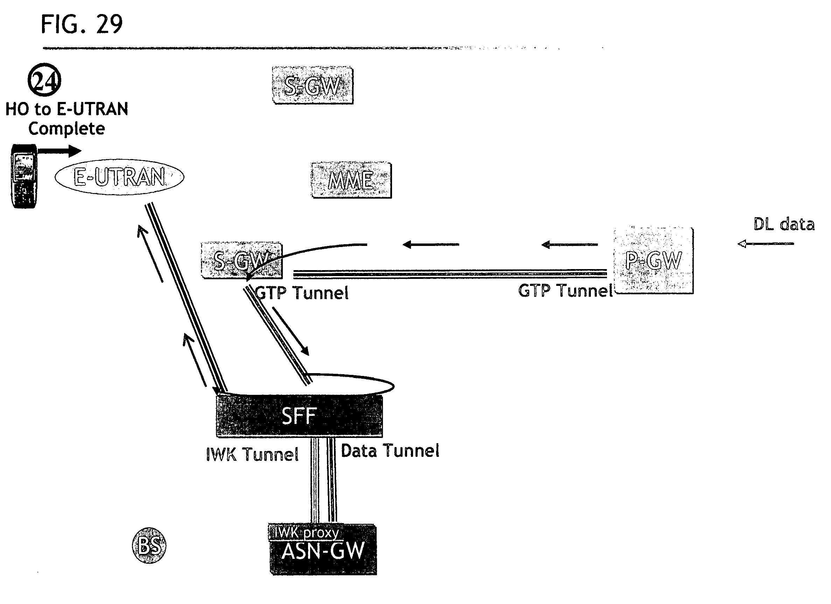

Figure 29 illustrates a simplification for Direct Forwarding.
   In the example illustrated in figure 29, a data path is established between SFF and E-UTRAN, so that the data path for DL data comprises:
   - GTP Tunnel between P-GW and serving S-GW
   - GTP Tunnel between serving S-GW and SFF
   - data path between SFF and E-UTRAN.

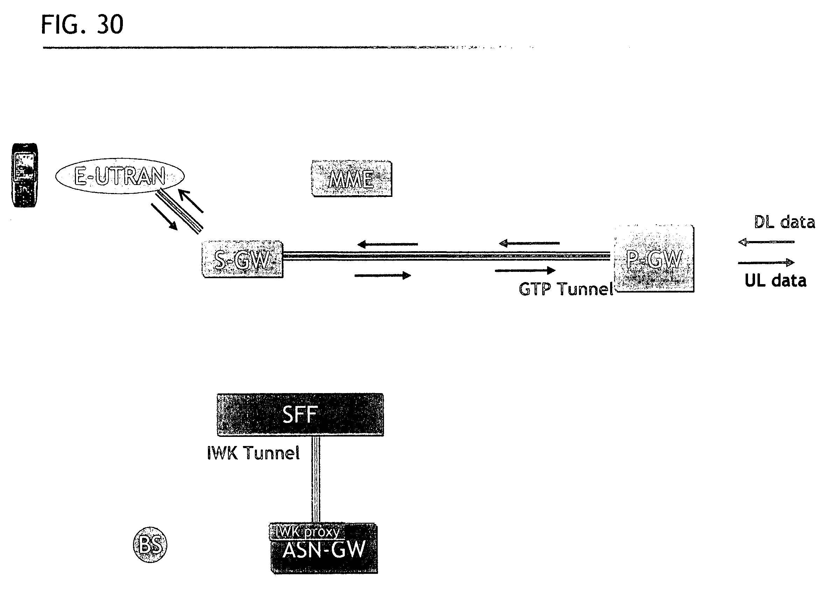

Figure 30 illustrates a simplification for common Serving and target S-GW.

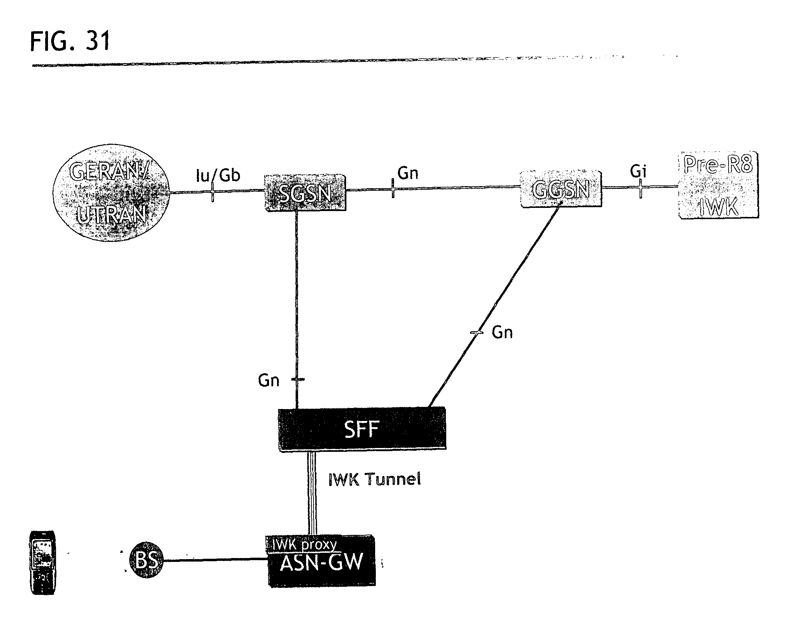

Figure 31 illustrates an example of system, for the case of Pre-Rel.8 3GPP CN, Pre-Rel.8 UE, Pre-Rel.8 3GPP AN corresponding to GERAN/UTRAN, and non 3GPP AN corresponding to WiMAX AN.
   The system schematically illustrated in figure 31 comprises, by way of example:
   - a User equipment UE, in this example a multi-mode WiMAX-UTRAN/GERAN User equipment UE,
   - a WiMAX Access Network including a Base Station BS and an ASN Gateway ASN-GW,
   - a 3GPP Access Network, in this example GERAN/UTRAN,
   - a 3GPP Packet Core Network comprising in this example: GPRS Packet Core Network nodes such as Serving GPRS Support Node SGSN, and Gateway GPRS Support Node GGSN (with SGSN and GGSN inter-connected by 3GPP Gn interface). In this example GGSN is also interconnected to an Interworking entity noted Pre-Rel.8 IWK. Pre-Rel.8 IWK may be connected on the one hand to 3GPP PS CN via 3GPP Gi interface, and on the other hand to WiMAX CSN via WiMAX R3 interface. Pre-Rel.8 IWK may be associated with a specific APN such that, at 3GPP network entry or at handover from WiMAX to 3GPP, a User Equipment UE sends an Activate PDP Context with this specific APN for access to Pre-Rel.8 IWK. In other words, with such interworking entity, the WiMAX Home CSN is considered by GGSN as an ISP identified by a dedicated APN. Such interworking entity Pre-Rel.8 IWK is not the subject-matter of the present application and therefore will not be described in more detail here.
   - an Interworking entity, IWK entity, also called SFF (Signalling Forwarding Function), connected on the one hand to SGSN via 3GPP GN interface and to GGSN via 3GPP Gn interface, and on the other hand to WiMAX ASN-GW via an Interworking IWK Tunnel.
   In a system such as the one illustrated by way of example in figure 31, a handover from WiMAX to UTRAN for example may be performed as illustrated by way of example in figures 32 to 40.
Figure 32 steps, similar to figure 2 steps, illustrate data path in the user plane (said data including Downlink DL data and Uplink UL data), before starting the handover process.

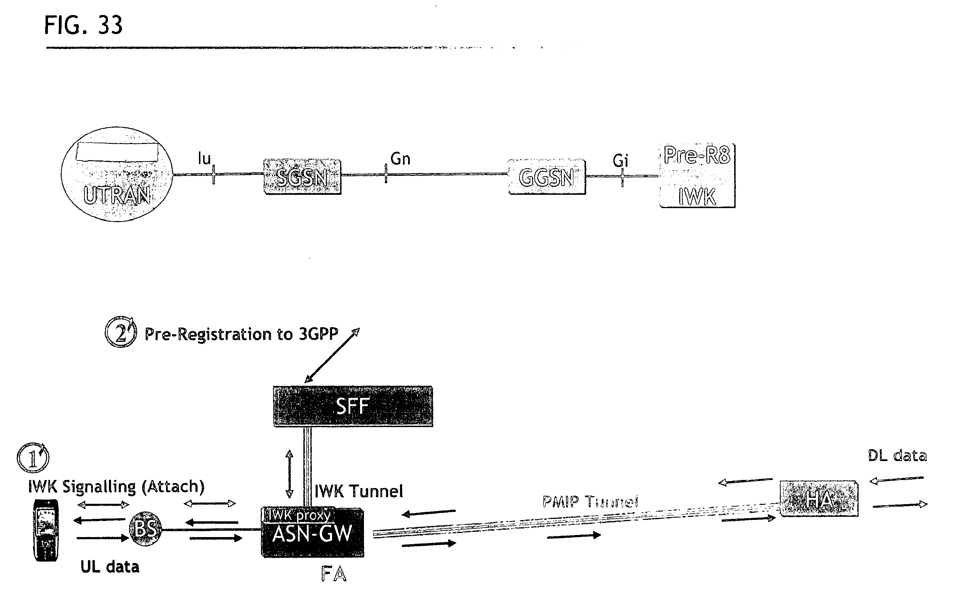

Figure 33 steps (including steps 1' and 2' similar to steps 1 and 2 of figure 3) illustrate a 3GPP Attach procedure (in case such procedure is required).

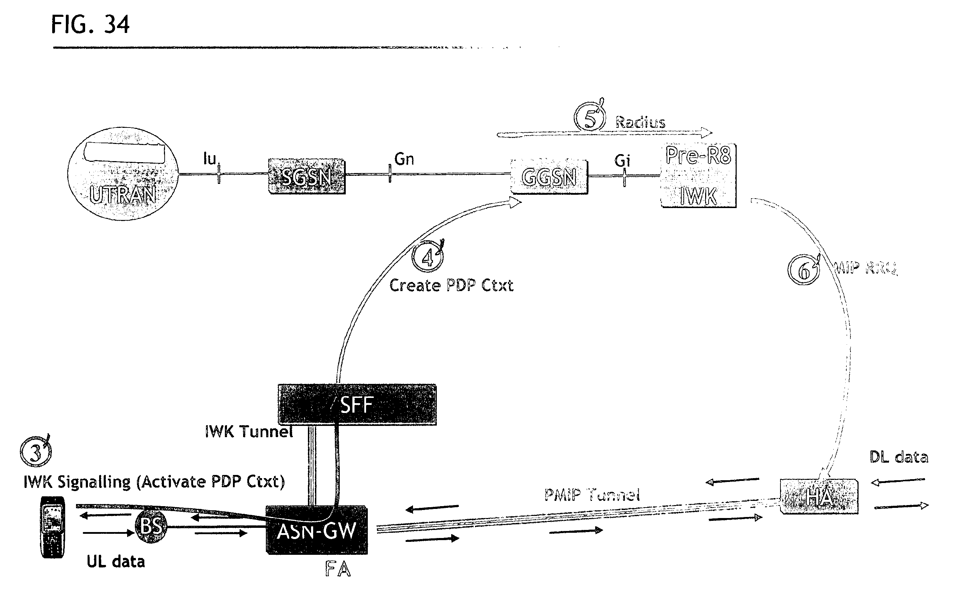

Figure 34 illustrates a first part of a 3GPP PDP Context Activation procedure.
   In the illustrated example, the following steps are provided:
   - at step 3', the UE sends IWK signalling (in this case 3GPP Activate PDP Context Request as per 3GPP TS 24.008 or 23.060) via BS, ASN-GW, and IWK Tunnel to SFF acting as a Pre-Rel.8 SGSN,
   - at step 4', SFF, acting as a Pre-Rel. 8 SGSN, sends a Create PDP Context Request to GGSN (as per 3GPP TS 23.060),
   - at step 5', GGSN sends a RADIUS Request to Pre-Rel.8 IWK entity (as per 3GPP TS 29.061),
   - at step 6', Pre-Rel.8 IWK entity sends a MIP RRQ (Mobile IP Registration Request) to Home Agent HA.

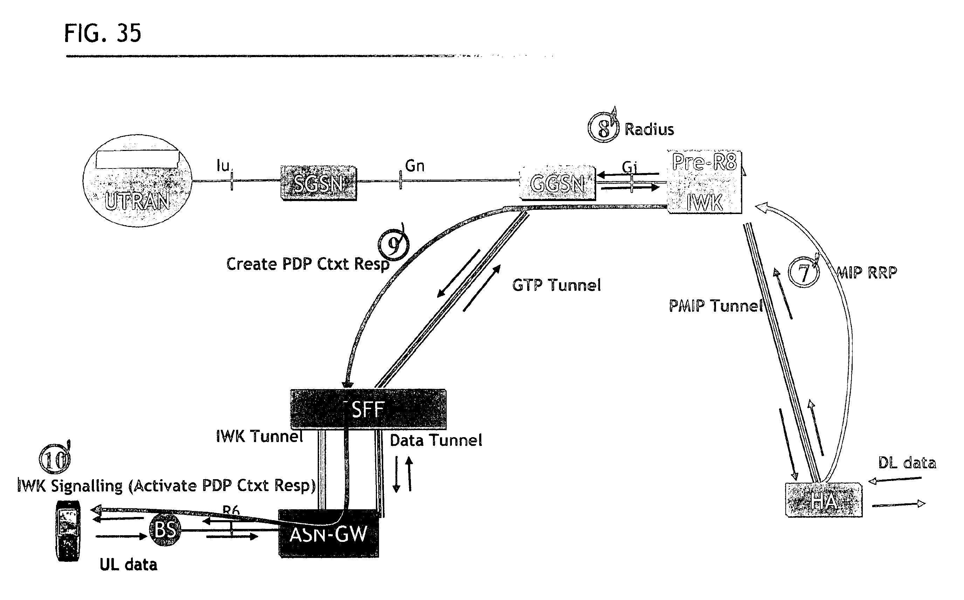

Figure 35 illustrates a second part of the 3GPP PDP Context Activation procedure. In the illustrated example, the following steps are provided:
   - at step 7', HA sends a MIP RRP (Mobile IP Registration Response) to Pre-Rel.8 IWK entity,
   - at step 8', Pre-Rel.8 IWK entity sends a RADIUS Response to GGSN (as per 3GPP TS 29.061),
   - at step9', GGSN sends a Create PDP Context Response to SFF acting as Pre-Rel.8 SGSN(as per 3GPP TS 23.060),
   - at step 10', SFF acting as a Pre-Rel.8 SGSN sends IWK signalling (in this case 3GPP Activate PDP Context Response as per 3GPP TS 24.008 or 23.060) to UE via IWK Tunnel, ASN-GW and BS.

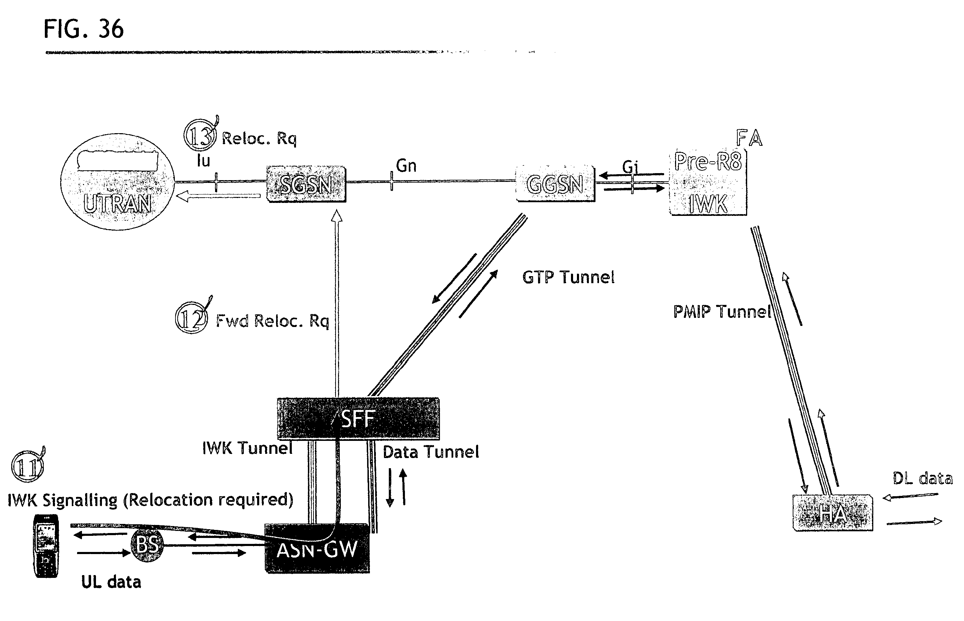

Figure 36 illustrates a first part of a 3GPP CN node relocation procedure. In the illustrated example, the following steps are provided :
   - at step 11', IWK signalling (noted Relocation Required to indicate that it is used to initiate an inter-SGSN Relocation procedure as per 3GPP TS 29.060, in a way similar to a Relocation Required according to SRNS Relocation procedure per 3GPP TS 25.413) is sent by UE via BS, ASN-GW, and IWK Tunnel, to SFF acting as a Pre-Rel.8 SGSN,
   - at step 12', SFF, acting as an old Pre-Rel.8 SGSN, sends a Forward Relocation Request according to inter-SGSN Relocation procedure as per 3GPP TS 29.060, to a Pre-Rel. 8 new SGSN,
   - at step 13', new SGSN sends Relocation Request to UTRAN ( as per 3GPP TS 25.413).

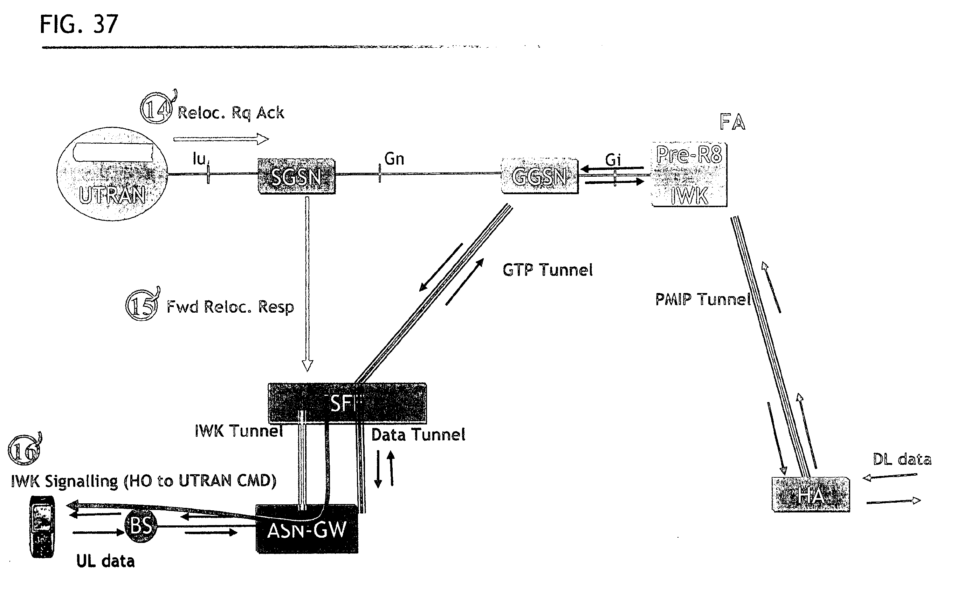

Figure 37 illustrates a second part of the relocation procedure. In the illustrated example, the following steps are provided:
   - at step 14', UTRAN sends Relocation Request Ack. to new SGSN ( according to 3GPP TS 25.413),
   - at step 15', new SGSN sends Forward Relocation Response to SFF acting as old SGSN according to inter-SGSN Relocation procedure per 3GPP TS 29.060,
   - at step 16', SFF acting as a Pre-Rel.8 SGSN sends IWK signalling (noted HO To UTRAN Command to indicate that it is used to convey a HO Command to the UE, in a way similar to information conveyed in a Relocation Command according to 3GPP TS 25.413 in the case of UTRAN for example), to the UE via IWK Tunnel, ASN-GW and BS.

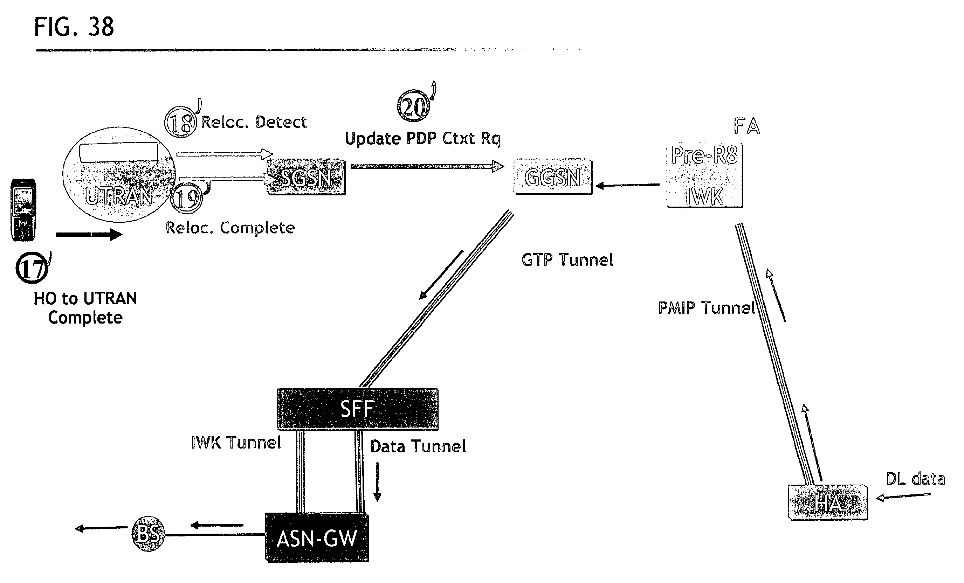

Figure 38 illustrates a third part of the relocation procedure. In the illustrated example, the following steps are provided:
   - at step 17', UE sends a HO to UTRAN Complete to UTRAN,
   - at step 18', UTRAN sends Relocation Detect to new SGSN,
   - at step 19', UTRAN sends Relocation Complete to new SGSN,
   - at step 20', new SGSN sends Update PDP Context request to GGSN.

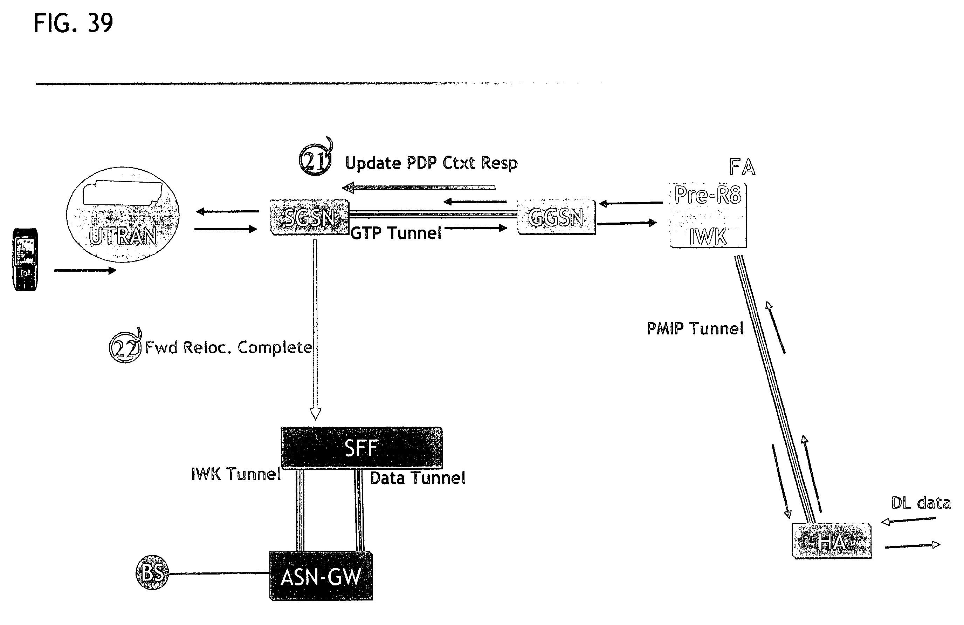

Figure 39 illustrates a fourth part of the relocation procedure. In the illustrated example, the following steps are provided (as per inter-SGSN Relocation procedure specified in 3GPP TS 29.060):
   - at step 21', GGSN sends Update PDP Context Response to new SGSN,
   - at step 22', new SGSN sends Forward Relocation Complete to SFF acting as an old SGSN.

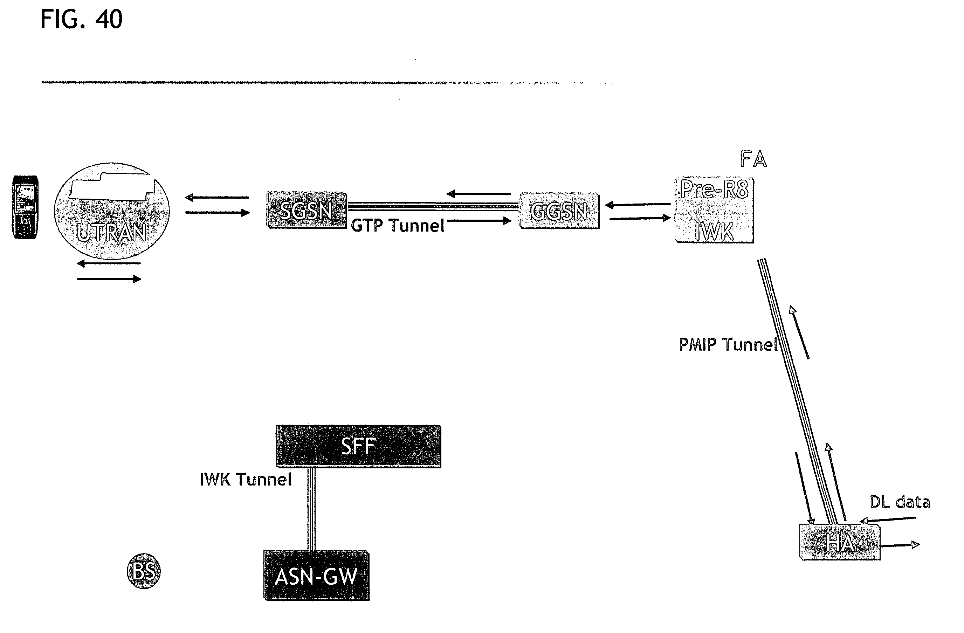

Figure 40 illustrates user data path after relocation procedure. In the illustrated example, the data path comprises:
   - PMIP Tunnel between HA and Pre-R8 IWK entity (acting as Foreign Agent FA),
   - GTP Tunnel between GGSN and SGSN,
   - data path between SGSN and UTRAN.
   In some embodiments, following steps may be performed:
   1) At start-up time, a bidirectional tunnel is setup between ASN-GW and IWKentity for interworking purposes.
   2) The UE detects the need for a handover from non 3GPP AN to 3GPP AN and sends signaling messages containing the necessary information to the ASN-GW (such as IWK signaling as described above in relation with figures 1 to 40). Destination address and port number may be used as criteria for the ASN-GW to detect those are interworking IWK messages.
   3) The ASN-GW adds to the UE IWK messages an overhead allowing to identify the UE and sends this to the IWKentity (such as SFF as described above in relation with figures 1 to 40) via the tunnel predefined from step 1). The IWK entity (such as SFFas described above in relation with figures 1 to 40) adds to IWK messages to the UE the interworking overhead identifying the UE (same as the one received in messages from the ASN-GW in this example; other examples would of course be possible, such as IWK entity and ASN-GW exchanging respective interworking overheads).
   4) The IWKentity performs the 3GPP signaling (e.g. GTP) towards the 3GPP Core Network. This results in registering the UE in the 3GPP network and either activating/creating a PDP context at the SGSN/GGSN level in the case of Pre-Rel.8 3GPP CN, or creating default bearers in the case of non Pre-Rel8 3GPP CN, e.g. EPC.
   5) The PDP context activation or the default EPS bearer creation triggers a PMIP update at the HA or P-GW level. If Pre-Release 8, data is routed by the HA towards the GGSN through the Pre-Rel8-IWK function. If EPC, data is routed by the P-GW towards the S-GW.

In some embodiments, following steps may be provided:
UE - ASN-GW IWK Signalling:
   - UE sends IWK messages to ASN-GW (those messages contain 3GPP TS 24.008 signalling be it a Pre-Rel.8 UE (also noted UTRAN/GERAN UE) or a non Pre-Rel.8 UE (also noted LTE UE)).
ASN-GW - SFF IWK Signalling:
   - ASN-GW adds an IWK overhead (Mobile Reference or Id, a few spare fields for future protocol extension)
   - ASN-GW sends this to the IWK entity SFF.
UE to SFF IWK messages:
   - Those messages follow TS 24.008. Whatever the UE type (UTRAN/GERAN or LTE), on this interface the UE behaves as a UTRAN/GERAN UE facing an SGSN.

### SFF to Pre-Release 8 Packet Core interface:

This interface is identical to Gn interface from 3GPP perspective. The handover preparation will use a classical relocation procedure.

### SFF to EPC interface:

This interface is identical to S3 and S4 from 3GPP perspective. The handover preparation will use a UTRAN/GERAN to LTE handover procedure (even with an LTE UE coming from WiMAX).

In one aspect , in an embodiment, the present invention provides a method for handover from non 3GPP to 3GPP Access Network AN, for a User Equipement UE accessing a 3GPP Packet Core Network 3GPP CN in a multi-Access Network system, said method comprising a step of:
- exchanging signalling with 3GPP CN via an Interworking entity IWK entity for a UE still served by non 3GPP AN, using the same type of signalling between UE and IWK entity whatever the type of UE and type of 3GPP CN , 3GPP Pre-Rel.8 or 3GPP non Pre-Rel.8..

In an embodiment, said method comprises a step of:
- exchanging signalling between said IWK entity and said non 3GPP AN through a tunnel setup for interworking purposes, referred to as interworking tunnel.

In an embodiment, said IWK entity acts as a Pre-Rel.8 SGSN towards said UE.

In an embodiment, said signalling includes:
- signalling exchanged for handover preparation and/or execution.

In an embodiment, said signalling between UE and IWK entity includes:
- signalling exchanged for 3GPP Pre-Rel.8 PDP Context Activation procedure.

In an embodiment, signalling between IWK entity and 3GPP CN includes, in the case of 3GPP Pre-Rel.8 CN:
- signalling exchanged for 3GPP Pre-Rel.8 PDP Context Creation procedure.

In an embodiment, signalling between IWK entity and 3GPP CN includes, in the case of 3GPP non Pre-Rel.8 CN:
- signalling exchanged for 3GPP non Pre-Rel.8 Default Bearer Creation procedure.

In an embodiment, said signalling between UE and IWK entity includes:
- signalling exchanged for initiating a 3GPP Pre-Rel.8 CN node relocation procedure, IWK entity acting as an old 3GPP CN node for said 3GPP Pre-Rel.8 CN node relocation procedure.

In an embodiment, signalling between IWK entity and 3GPP CN includes, in the case of 3GPP Pre-Rel.8 UE, 3GPP non Pre-Rel.8 CN, and 3GPP Pre-Rel.8 AN:
- signalling exchanged for a 3GPP Pre-Rel.8 CN node relocation procedure, between IWK entity and a 3GPP CN node acting as a new 3GPP CN node for said 3GPP Pre-Rel.8 CN node relocation procedure,
- signalling exchanged for a 3GPP non Pre-Rel.8 inter-RAT handover procedure from a source 3GPP non Pre-Rel.8 AN via which a 3GPP non Pre-Rel.8 UE accesses a 3GPP non Pre-Rel.8 CN, to a target 3GPP Pre-Rel.8 AN via which a 3GPP Pre-Rel.8 UE accesses a 3GPP non Pre-Rel.8 CN, said new 3GPP CN node acting as a target 3GPP CN node for said 3GPP non Pre-Rel.8 inter-RAT handover procedure.

In an embodiment, said signalling includes, in the case of 3GPP non Pre-Rel.8 UE, 3GPP non Pre-Rel.8 CN, and 3GPP non Pre-Rel.8 AN:
- signalling exchanged for a 3GPP non Pre-Rel.8 inter-RAT handover procedure from a source 3GPP Pre-Rel.8 AN via which a 3GPP Pre-Rel.8 UE accesses a 3GPP non Pre-Rel.8 CN, to a target 3GPP non Pre-Rel.8 AN via which a 3GPP non Pre-Rel.8 UE accesses a 3GPP non Pre-Rel.8 CN, IWK entity acting as as source 3GPP CN node for said 3GPP non Pre-Rel.8 inter-RAT handover procedure.

In an embodiment, said signalling includes, in the case of 3GPP Pre-Rel.8 UE, 3GPP Pre-Rel.8 CN and 3GPP pre-Rel.8 AN:
- signalling exchanged for a 3GPP Pre-Rel.8 CN node relocation procedure.

In an embodiment, said 3GPP Pre-Rel.8 CN node relocation procedure corresponds to an inter-SGSN Relocation procedure.

In an embodiment, said 3GPP non Pre-Rel.8 inter-RAT handover procedure corresponds to E-UTRAN to UTRAN inter-RAT handover procedure.

In an embodiment, said 3GPP non Pre-Rel.8 inter-RAT handover procedure corresponds to UTRAN to E-UTRAN inter-RAT handover procedure.

In an embodiment, said method comprises a step of:
- on receiving interworking data to be sent to UE via a non 3GPP AN entity, IWK entity adding to said data an overhead referred to as interworking overhead allowing to identify the UE, before sending said data to non 3GPP AN entity through said interworking tunnel.

In an embodiment, said overhead corresponds to the same overhead as added by non 3GPP AN entity before sending interworking data to IWK entity through said interworking tunnel.

In an embodiment, said method comprises the steps of:
- UE adding to interworking data to be sent to IWK entity via a non 3GPP AN entity a destination address corresponding to non 3GPP AN entity address, and a port number enabling non 3GPP AN entity to detect that said data correspond to interworking data,
- non 3GPP AN entity detecting data corresponding to interworking data, based on said port number.

In addition to a method for handover from non 3GPP to 3GPP Access Network (examples of which have been decribed above), the present invention also has for its object different entities, such as in particular User equipment UE, Interworking entity IWK entity, and non 3GPP AN entity (such as in particular ASN-GW), comprising, in an embodiment, means for performing such method.

The detailed implementation of the above-mentioned means does not raise any special problem for a person skilled in the art, and therefore such means do not need to be more fully disclosed than has been made above, by their function, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for handover from non 3GPP to 3GPP Access Network AN, for a User Equipement UE accessing a 3GPP Packet Core Network 3GPP CN in a multi-Access Network system, said method comprising a step of:
- exchanging signalling with 3GPP CN via an Interworking entity IWK entity for a UE still served by non 3GPP AN, using the same type of signalling between UE and IWK entity whatever the type of UE and type of 3GPP CN, 3GPP Pre-Rel.8 or 3GPP non Pre-Rel.8.

2. A method according to claim 1, comprising a step of:
- exchanging signalling between said IWK entity and said non 3GPP AN through a tunnel setup for interworking purposes, referred to as interworking tunnel.

3. A method according to claim 1 or 2, wherein IWK entity acts as a Pre-Rel.8 SGSN towards said UE.

4. A method according to any of claims 1 to 3, wherein said signalling includes:
- signalling exchanged for handover preparation and/or execution.

5. A method according to any of claims 1 to 4, wherein said signalling between UE and IWK entity includes:
- signalling exchanged for 3GPP Pre-Rel.8 PDP Context Activation procedure.

6. A method according to any of claims 1 to 5, wherein signalling between IWK entity and 3GPP CN includes, in the case of 3GPP Pre-Rel.8 CN:
- signalling exchanged for 3GPP Pre-Rel.8 PDP Context Creation procedure.

7. A method according to any of claims 1 to 6, wherein signalling between IWK entity and 3GPP CN includes, in the case of 3GPP non Pre-Rel.8 CN:
- signalling exchanged for 3GPP non Pre-Rel.8 Default Bearer Creation procedure.

8. A method according to any of claims 1 to 7, wherein said signalling between UE and IWK entity includes:
- signalling exchanged for initiating a 3GPP Pre-Rel.8 CN node relocation procedure, IWK entity acting as an old 3GPP CN node for said 3GPP Pre-Rel.8 CN node relocation procedure.

9. A method according to any of claims 1 to 8, wherein signalling between IWK entity and 3GPP CN includes, in the case of 3GPP Pre-Rel.8 UE, 3GPP non Pre-Rel.8 CN, and 3GPP Pre-Rel.8 AN:
- signalling exchanged for a 3GPP Pre-Rel.8 CN node relocation procedure, between IWK entity and a 3GPP CN node acting as a new 3GPP CN node for said 3GPP Pre-Rel.8 CN node relocation procedure,
- signalling exchanged for a 3GPP non Pre-Rel.8 inter-RAT handover procedure from a source 3GPP non Pre-Rel.8 AN via which a 3GPP non Pre-Rel.8 UE accesses a 3GPP non Pre-Rel.8 CN, to a target 3GPP Pre-Rel.8 AN via which a 3GPP Pre-Rel.8 UE accesses a 3GPP non Pre-Rel.8 CN, said new 3GPP CN node acting as a target 3GPP CN node for said 3GPP non Pre-Rel.8 inter-RAT handover procedure.

10. A method according to any of claims 1 to 8, wherein said signalling includes, in the case of 3GPP non Pre-Rel.8 UE, 3GPP non Pre-Rel.8 CN, and 3GPP non Pre-Rel.8 AN:
- signalling exchanged for a 3GPP non Pre-Rel.8 inter-RAT handover procedure from a source 3GPP Pre-Rel.8 AN via which a 3GPP Pre-Rel.8 UE accesses a 3GPP non Pre-Rel.8 CN, to a target 3GPP non Pre-Rel.8 AN via which a 3GPP non Pre-Rel.8 UE accesses a 3GPP non Pre-Rel.8 CN, IWK entity acting as as source 3GPP CN node for said 3GPP non Pre-Rel.8 inter-RAT handover procedure.

11. A method according to any of claims 1 to 8, wherein said signalling includes, in the case of 3GPP Pre-Rel.8 UE, 3GPP Pre-Rel.8 CN and 3GPP pre-Rel.8 AN:
- signalling exchanged for a 3GPP Pre-Rel.8 CN node relocation procedure.

12. A method according to any of claims 8 to 11, wherein said 3GPP Pre-Rel.8 CN node relocation procedure corresponds to an inter-SGSN Relocation procedure.

13. A method according to claim 9, wherein said 3GPP non Pre-Rel.8 inter-RAT handover procedure corresponds to E-UTRAN to UTRAN inter-RAT handover procedure.

14. A method according to claim 10, wherein said 3GPP non Pre-Rel.8 inter-RAT handover procedure corresponds to UTRAN to E-UTRAN inter-RAT handover procedure.

15. A method according to any of claims 2 to 14, comprising a step of:
- on receiving interworking data to be sent to UE via a non 3GPP AN entity, IWK entity adding to said data an overhead referred to as interworking overhead allowing to identify the UE, before sending said data to non 3GPP AN entity through said interworking tunnel.

16. A method according to claim 15, wherein said overhead corresponds to the same overhead as added by non 3GPP AN entity before sending interworking data to IWK entity through said interworking tunnel.

17. A method according to any of claims 2 to 16, comprising the steps of:
- UE adding to interworking data to be sent to IWK entity via a non 3GPP AN entity a destination address corresponding to non 3GPP AN entity address, and a port number enabling non 3GPP AN entity to detect that said data correspond to interworking data,
- non 3GPP AN entity detecting data corresponding to interworking data, based on said port number.

18. A User Equipment UE, comprising means for performing a method according to any of claim 1 to 17.

19. An interworking entity, IWK entity , comprising means for performing a method according to any of claim 1 to 17.

20. A non 3GPP Access Network entity, comprising means for performing a method according to any of claim 1 to 17.
